# EUROPÄISCHE PATENTSCHRIFT

(11) **EP 0 673 711 B1**
(45) Veröffentlichungstag und Bekanntmachung des Hinweises auf die Patenterteilung: **31.03.1999**
(21) Anmeldenummer: 94120258.2
(22) Anmeldetag: 21.12.1994
(51) Int. Cl.: B23Q 11/08

(54) **Handhabungssystem**
Handling system
Système de manutention

(30) Priorität: 21.03.1994 DE 4409532
(43) Veröffentlichungstag der Anmeldung: 27.09.1995
(73) Patentinhaber: FELSOMAT GmbH & Co. KG, D-75203 Königsbach-Stein (DE)
(72) Erfinder: Jäger, Helmut, D-75203 Königsbach-Stein (DE)
(74) Vertreter: Gahlert, Stefan, Dr.-Ing.

(56) Entgegenhaltungen:
- DE-U- 9 404 713
- FR-A- 2 693 673
- GB-A- 2 112 365
- US-A- 5 147 174
- PATENT ABSTRACTS OF JAPAN vol. 18 no. 79 (M-1557) ,9.Februar 1994 & JP-A-05 293739 (BABA HARUKI) 9.November 1993,

## Beschreibung

Die Erfindung betrifft ein Handhabungssystem zur von Werkstücken , mit einem Arbeitsraum, der durch eine Schutzwand nach außen abgeschlossen ist und innerhalb dessen eine Stapelbereitstellungsvorrichtung zur Bereitstellung von Werkstückträgern mit unbearbeiteten Werkstücken und zur Aufnahme von Werkstückträgern nach Bearbeitung vorgesehen ist, mit einer der Stapelbereitstellungsvorrichtung zugeordneten Ladevorrichtung zur Übergabe von unbearbeiteten Werkstücken und zur Aufnahme von Werkstücken nach Bearbeitung.

Derartige Handhabungssysteme sind grundsätzlich bekannt und werden zur Beschickung von Werkzeugmaschinen und dergleichen verwendet. Als Stapelbereitstellungsvorrichtung wird hierbei meist eine Palettenumsetzvorrichtung mit zwei gesteuerten Achsen in Horizontalrichtung und in Vertikalrichtung eingesetzt, der von außerhalb des Arbeitsraumes über ein Band Werkstückträger mit unbearbeiteten Werkstücken zugeführt werden können, und wobei aus dem Arbeitsraum Werkstückträger mit bearbeiteten Werkstücken über ein weiteres Band ausgeschleust werden können. Von der Stapelbereitstellungsvorrichtung werden die Werkstückträger in der Regel an die Ladevorrichtung übergeben, die meist als Portal ausgebildet ist, von dem aus einzelne Werkstücke mittels Greifern oder dergleichen übernommen werden können, und von der Ladevorrichtung der nachgeordneten Bearbeitungseinrichtung, beispielsweise einer Werkzeugmaschine, zugeführt. Nach Beendigung der Bearbeitung werden die bearbeiteten Werkstücke wieder von der Ladevorrichtung übernommen und auf dem Werkstückträger der Stapelbereitstellungsvorrichtung abgesetzt. Die Werkstückträger mit den bearbeiteten Werkstücken werden sodann wieder über das Band aus dem Arbeitsraum ausgeschleust.

Als nachteilig hat sich bei einem derartigen Handhabungssystem die Tatsache erwiesen, daß immer dann, wenn die Werkstückträgerstapel mit unbearbeiteten Werkstücken im Arbeitsraum vollständig abgearbeitet sind, mittels des Zuführbandes neue Werkstückträger mit unbearbeiteten Werkstücken zugeführt werden müssen, damit kein Stillstand auftritt. Demnach ist eine ständige Kontrolle des Handhabungssystems erforderlich und eine Automatisierung nur bedingt möglich.

Die Aufgabe der Erfindung besteht demnach darin, ein verbessertes Handhabungssystem zur Zuführung von Werkstücken an eine nachgeordnete Bearbeitungseinrichtung zu schaffen, mit dem eine weitgehende Automatisierung und eine kostengünstige Arbeitsweise ermöglicht ist. Dabei soll eine möglichst kompakte Bauweise erreicht werden, und die Notwendigkeit einer ständigen Kontrolle durch Bedienungspersonal soll möglichst verringert werden.

Ferner soll ein verbessertes Verfahren zur Handhabung von Werkstücken mit einem derartigen Handhabungssystem geschaffen werden, mit dem die vorstehend beschriebenen Nachteile vermieden werden.

Die Aufgabe der Erfindung wird bei einem Handhabungssystem gemäß der eingangs genannten Art dadurch gelöst, daß eine Stapelwechseleinheit zur Zuführung von Werkstückträgerstapeln mit unbearbeiteten Werkstücken zu der Stapelbereitstellungsvorrichtung und zur Entnahme von Werkstückträgerstapeln nach Bearbeitung von der Stapelbereitstellungsvorrichtung vorgesehen ist, wobei die Stapelwechseleinheit einen ersten Bereich innerhalb des Arbeitsraumes zur Bereitstellung von Werkstückträgerstapeln für die Stapelbereitstellungsvorrichtung und einen zweiten Bereich aufweist, der außerhalb des Arbeitsraumes einen Laderaum zur Zuführung und zur Entnahme von Werkstückträgerstapeln von außen bildet, wobei die Stapelwechseleinheit einen Drehtisch mit vertikaler Achse zum Transport der Werkstückträger zwischen dem ersten und den zweiten Bereich aufweist, und wobei der Arbeitsraum im Bereich der Stapelwechseleinheit durch einen Schutzwandabschnitt begrenzt ist, der mit dem Drehtisch verbunden und gemeinsam mit diesem verdrehbar ist.

Erfindungsgemäß wird also eine Stapelbereitstellungsvorrichtung innerhalb eines Arbeitsraums, die mit einer Ladevorrichtung zur Übergabe der Werkstücke oder Werkstückträger an eine nachgeordnete Bearbeitungseinrichtung zugeordnet ist, mit einer Stapelwechseleinheit zur Zuführung von Werkstückträgerstapeln gekoppelt. Die Stapelwechseleinheit weist einen ersten Bereich innerhalb des Arbeitsraums zur Bereitstellung von Werkstückträgerstapeln für die Stapelbereitstellungsvorrichtung und einen zweiten Bereich außerhalb des Arbeitsraums auf, in dem Werkstückträgerstapel von außen zugeführt werden können.

Anstelle eines Bandtransportes einzelner Werkstückträger oder Paletten zu der Stapelbereitstellungsvorrichtung innerhalb des Arbeitsraums werden nunmehr erfindungsgemäß innerhalb des Laderaums Werkstückträgerstapel in den zweiten Bereich der Stapelwechseleinheit von außen zugeführt und können bei Bedarf, wenn die Werkstückträgerstapel innerhalb des Arbeitsraums abgearbeitet sind, aus dem Laderaum in den Arbeitsraum übergeben werden, so daß die Stapelbereitstellungsvorrichtung innerhalb des Arbeitsraums wiederum einen Stapel mit Werkstückträgern zur Verfügung hat, so daß ein Stillstand vermieden wird und eine weitgehende Entkopplung erreicht wird.

In herkömmlicher Weise wird bei Großserienfertigungen, in der eine Mehrzahl von Bearbeitungseinrichtungen, zum Beispiel Bearbeitungszentren, mit Werkstücken versorgt werden und diese wiederum mit einer Vielzahl von anderen Bearbeitungseinrichtungen gekoppelt sind, der Werkstücktransport zwischen den einzelnen Bearbeitungseinrichtungen mittels Bändern und Ladeportalen erreicht. Dies führt zu einer sehr engen Verkopplung der einzelnen Bearbeitungseinrichtungen durch Taktbänder, so daß bei Stillstand einer einzelnen Bearbeitungseinrichtung innerhalb von kurzer Zeit die Gesamtanlage stillsteht.

Mit dem erfindungsgemäßen Handhabungssystem wird die Gefahr von Stillständen einer größeren Gesamtanlage weitgehend vermieden, da mit der Stapelwechseleinheit immer eine größere Anzahl von Werkstückträgern in der Zuführeinrichtung für die nachgeordneten Bearbeitungseinrichtungen als Puffer zur Verfügung steht. Durch diese zusätzlichen Puffer, die infolge des kompakten Aufbaus jedoch keinen zusätzlichen Platz benötigen, wird die Gefahr von unbeabsichtigten Stillständen der Gesamtanlage erheblich reduziert, so daß insgesamt der Gesamtnutzungsgrad bei einer Teilefertigung erheblich verbessert wird. Dies hat zur Folge, daß bei einer größeren Fertigungsanlage die Gesamtzahl von Bearbeitungseinrichtungen infolge des verbesserten Gesamtnutzungsgrades verringert werden kann, so daß insgesamt erhebliche Kosteneinsparungen erzielt werden und darüber hinaus der Platzbedarf reduziert wird. Ferner wird auch der Personalbedarf reduziert, da eine Mehrzahl von erfindungsgemäßen Handhabungssystemen als kompakte Zellen zur Kopplung der einzelnen Bearbeitungseinrichtungen verwendet werden kann, wobei ein manuelles Eingreifen erst dann erforderlich wird, wenn ein ganzer Werkstückträgerstapel eines jeweiligen Handhabungssystems abgearbeitet ist und ein neuer Werkstückträgerstapel von außen zugeführt werden muß.

Dadurch, daß die Stapelwechseleinheit einen Drehtisch mit vertikaler Achse zum Transport der Werkstückträger zwischen dem ersten und dem zweiten Bereich aufweist, läßt sich ein besonders einfacher Transport der Werkstückträgerstapel zwischen dem ersten und dem zweiten Bereich erreichen, wobei der Platzbedarf der stapelwechseleinheit besonders gering ist und eine hohe Zuverlässigkeit gewährleistet ist.

Durch die zusätzliche Begrenzung des Arbeitsraumes im Bereich der Stapelwechseleinheit durch einen Schutzwandabschnitt, der mit dem Drehtisch verbunden und gemeinsam mit diesem verdrehbar ist, wird der aus Gründen des Unfallschutzes notwendige Abschluß des Arbeitsraums nach außen in besonders einfacher und kostengünstiger Weise erreicht, wobei eine hohe Zuverlässigkeit gewährleistet ist.

Zwar ist es aus der GB-A-2 112 365 und aus der US-A-4 946 340 grundsätzlich bekannt, mehrere Werkstückträgerstapel in einem Handhabungssystem zu verwenden, die mittels verschiedener Förderbänder und Hebeeinrichtungen bewegt werden können, um eine Pufferbildung für Werkstückträger für eine zugeordnete Bearbeitungseinrichtung zu ermöglichen. Derartige Systeme sind jedoch außerordentlich platzintensiv und aufwendig zu steuern und zu kontrollieren , insbesondere sofern die aus Gründen des Arbeitsschutzes erforderliche Schutzverkleidung nach außen angebracht wird.

Ferner ist auch die Verwendung von Dreheinheiten zum Austausch von Teilen grundsätzlich bekannt, wie durch die JP-A-52-93739 für Werkzeugmaschinen und durch die FR-A-2 693 673 für Handhabungssysteme offenbart ist.

Der Drehtisch gemäß der JP-A-52-93739 ist jedoch lediglich zum Austausch einzelner Werkstücke an der Bearbeitungseinheit einer Werkzeugmaschine vorgesehen. Gemäß der FR-A-2 693 673 wird lediglich ein Drehantrieb verwendet, um volle oder leere Wagen auszutauschen.

In vorteilhafter Weiterbildung der Erfindung ist der Laderaum durch eine zweite Schutzwand nach außen abgetrennt, in der mindestens eine Ladetür zum Be- und Entladen von Werkstückträgerstapeln vorgesehen ist, und bei dem der Drehtisch mit einer Verriegelungseinheit gekoppelt ist, um nur bei geschlossenem Schutzwandabschnitt ein Öffnen der Ladetür von außen zu ermöglichen.

Durch diese Maßnahme wird eine Entkopplung zwischen Arbeitsraum und Laderaum erreicht, so daß die Ladetür von außen zum Austausch von Werkstückträgerstapeln nur dann geöffnet werden kann, wenn ein sicherer Abschluß des Arbeitsraumes gegenüber dem Laderaum durch die Verriegelungseinheit sichergestellt ist, so daß der Arbeitsraum im Bereich der Stapelwechseleinheit mit dem Schutzwandabschnitt vollständig geschlossen ist. Dadurch wird ein vollständiger Unfallschutz in jeder Phase der Bearbeitung gewährleistet, und gleichzeitig kann während der Handhabung von Werkstückträgerstapeln innerhalb des Arbeitsraums ein Austausch der Werkstückträgerstapel innerhalb des Laderaums ohne weiteres in zeitsparender Weise vorgenommen werden.

Bei einer weiteren vorteilhaften Ausgestaltung der Erfindung sind die Werkstückträger in der Stapelwechseleinheit auf Rollwagen gehalten, die mittels des Drehtisches auf dem Boden zwischen dem ersten und zweiten Bereich verfahrbar sind.

Diese Maßnahme hat den Vorteil, daß das Gewicht der Werkstückträger und der darin aufgenommenen Werkstücke nicht von dem Drehtisch aufgenommen werden muß, sondern durch die Rollwagen unmittelbar auf den Boden übertragen wird. Der Drehtisch muß daher lediglich die seitliche Abstützung der Werkstückträgerstapel und einen Transport der Werkstückträgerstapel beim Verdrehen ermöglichen. Dadurch ist eine besonders einfache und kostengünstige Konstruktion ermöglicht.

In vorteilhafter Weiterbildung dieser Ausgestaltung der Erfindung ist der Drehtisch als H-förmiges Drehgestell mit einem gemeinsamen Mittelabschnitt und zwei vom Mittelabschnitt jeweils nach außen weisenden U-förmigen Abschnitten ausgebildet.

Diese Maßnahme hat den Vorteil, daß die Werkstückträgerstapel auf Rollwagen im Ladebereich einfach in den U-förmigen Abschnitt ein- bzw. ausgefahren werden können, wobei nach vollständigem Einfahren eine Verriegelung vorgenommen wird, so daß anschließend bei einem späteren Wechsel der Werkstückträgerstapel zwischen dem ersten und dem zweiten Bereich ein automatischer Ablauf ermöglicht ist.

In weiter vorteilhafter Ausgestaltung der Erfindung ist vorgesehen, die Stapelbereitstellungsvorrichtung, die Stapelwechseleinheit, die Schutzwand und die zweite Schutzwand auf einem gemeinsamen Grundgestell zu montieren.

Zusätzlich kann hierbei auch die Ladevorrichtung auf dem Grundgestell gehalten sein, die beispielsweise als Ladeportal oder als Roboter ausgebildet sein kann.

Durch diese Maßnahme wird erreicht, daß das erfindungsgemäße Handhabungssystem zu einer kompakten Automationszelle ausgebildet wird, innerhalb deren eine automatische Handhabung der Werkstücke bzw. Werkstückträgerstapel gewährleistet ist und gleichzeitig ein vollständiger Abschluß nach außen zum Zwecke des Unfallschutzes erreicht wird.

Zusätzlich können in die so gebildete kompakte Automationszelle auch weitere Einrichtungen, wie etwa ein Schaltschrank und eine Bedienungskonsole, integriert werden, um einen besonders platzsparenden und kompakten Aufbau zu erhalten.

In vorteilhafter Weiterbildung der Erfindung ist zusätzlich eine Einrichtung zum Aus- und Einschleusen von Werkstücken aus dem Arbeitsraum vorgesehen. Auf diese Weise können einzelne Werkstücke zu Kontrollzwecken während des Bearbeitungsvorgangs aus dem Arbeitsraum aus- bzw. eingeschleust werden.

Gemäß einer weiteren Ausgestaltung der Erfindung ist die Stapelbereitstellungsvorrichtung als Palettenumsetzvorrichtung ausgebildet, die einen in Vertikalrichtung und in Horizontalrichtung bewegbaren Ausleger mit einer ersten Schwinge aufweist, an der eine zweite Schwinge getrieblich derart zwangsgekoppelt gehalten ist, daß die zweite Schwinge mit ihrem freien Ende bei Drehung der ersten Schwinge eine Bewegungsbahn mit weitgehend linearen horizontalen und vertikalen Abschnitten beschreibt.

Dadurch wird ein besonders einfacher und kompakter Aufbau insbesondere im Zusammenhang mit der Ausbildung der Stapelwechseleinheit mit einem Drehtisch erreicht.

Auch der umgekehrte Fall ist möglich.

Die Aufgabe der Erfindung wird ferner durch ein Verfahren zur Handhabung von Werkstücken mit einem erfindungsgemäßen Handhabungssystem mit folgenden Schritten gelöst:
(a) Zuführen einer Mehrzahl von übereinander gestapelten Werkstückträgern mit unbearbeiteten Werkstücken in eine Lade-/Entladeposition einer Stapelwechseleinheit;
(b) Überführen der übereinander gestapelten Werkstückträger von der Lade-/Entladeposition mittels der Stapelwechseleinheit in eine Bereitstellungsposition für eine nachfolgende Stapelbereitstellungsvorrichtung;
(c) Umstapeln aller Werkstückträger aus der Bereitstellungsposition der Stapelwechseleinheit in eine Warteposition der Stapelbereitstellungsvorrichtung an einen freien Platz;
(d) Aufnehmen eines Werkstückträgers aus der Warteposition und Überführen in eine Zuführposition für eine Ladevorrichtung;
(e) Überführen eines Werkstückes aus der Zuführposition mittels der Ladevorrichtung zu einer nachgeordneten Bearbeitungseinrichtung;
(f) Übernehmen des Werkstückes nach Bearbeitung von der Ladevorrichtung in der Zuführposition durch die Stapelbereitstellungsvorrichtung;
(g) Wiederholen der Schritte (e) bis (f), bis alle Werkstücke eines Werkstückträgers bearbeitet sind;
(h) Überführen des Werkstückträgers mit bearbeiteten Werkstücken in die Bereitstellungsposition der Stapelwechseleinheit;
(i) Wiederholen der Schritte (d) bis (h), bis alle Werkstückträger von der Warteposition in die Bereitstellungsposition umgestapelt sind;
(j) Überführen der Werkstückträger mit bearbeiteten Werkstücken aus der Bereitstellungsposition in die Lade-/Entladeposition der Stapelwechseleinheit.

Erfindungsgemäß wird so zunächst eine Mehrzahl von übereinander gestapelten Werkstückträgern in der Lade-/Entladeposition in die Stapelwechseleinheit eingefahren und von dort in eine Bereitstellungsposition überführt. Aus der Bereitstellungsposition werden dann zunächst alle Werkstückträger mittels der Stapelbereitstellungsvorrichtung in eine Warteposition umgestapelt, um so freien Platz in der Bereitstellungsposition zu schaffen. Anschließend werden die übereinander gestapelten Werkstückträger aus der Warteposition nach und nach abgearbeitet und wieder in die Bereitstellungsposition zurückgestapelt, indem ein Werkstückträger aus der Warteposition an eine Zuführposition für die Ladevorrichtung überführt wird, dann mittels der Ladevorrichtung einzelne Werkstücke zur Bearbeitung an eine nachgeordnete Bearbeitungseinrichtung übergeben werden und die bearbeiteten Werkstücke auf den Werkstückträger zurückgeführt werden, bis alle Werkstücke bearbeitet sind, und der Werkstückträger anschließend in die Bereitstellungsposition zurückgestapelt wird. Anschließend werden die übrigen Werkstückträger nacheinander von oben abgearbeitet und wieder in die Bereitstellungsposition zurückgestapelt. Nachdem alle Werkstücke der übereinander gestapelten Werkstückträger bearbeitet und wieder in die Bereitstellungsposition zurückgestapelt sind, wird der Werkstückträgerstapel mittels der Stapelwechseleinheit wieder in die Lade-/Entladeposition überführt und kann dann gegen einen Werkstückträgerstapel mit unbearbeiteten Werkstücken ausgetauscht werden.

Bei einer Variante des vorstehend genannten Verfahrens wird auf das Umstapeln der Werkstückträger aus der Bereitstellungsposition in die Warteposition verzichtet, und stattdessen werden die Werkstückträger unmittelbar aus der Bereitstellungsposition in die Zuführposition für die Ladevorrichtung überführt und nurmehr ein Teil der Werkstücke bearbeitet, vorzugsweise die Hälfte der Werkstücke. Aus der Zuführposition werden die Werkstückträger dann mittels der Stapelbereitstellungsvorrichtung in die Warteposition überführt. Dieser Vorgang wird wiederholt, bis alle Werkstückträger aus der Bereitstellungsposition nach teilweiser Bearbeitung der Werkstücke in der Zuführposition in die Warteposition umgestapelt sind. Von hier aus werden die Werkstückträger nacheinander wieder in die Zuführposition überführt und nunmehr der Rest der Werkstücke bearbeitet. Nach abgeschlossener Bearbeitung der Werkstücke in der Zuführposition wird der jeweilige Werkstückträger wieder in die Bereitstellungsposition zurückgestapelt und der nächste Werkstückträger von dem Werkstückträgerstapel in der Warteposition aufgenommen, in die Zuführposition überführt und nach Bearbeitung der Werkstücke wieder in der Bereitstellungsposition abgelegt. Der übrige Vorgang entspricht dem zuvor beschriebenen Verfahren.

Diese Variante hat den Vorteil, daß infolge des Verzichtes auf das Umstapeln zu Beginn des Handhabungsvorgangs weniger Zeit verloren wird, so daß bei manchen Konstellationen die Gesamtzeit für Handhabung und Bearbeitung der Werkstücke insgesamt reduziert wird.

Bei weiteren Varianten der zuvor beschriebenen Verfahren werden nicht einzelne Werkstücke in der Zuführposition an die Ladevorrichtung übergeben, sondern jeweils ein Werkstückträger, also eine Palette oder dergleichen, auf der eine Mehrzahl von Werkstücken abgelegt sind. Im übrigen entsprechen diese beiden Varianten den zuvor beschriebenen Verfahren.

Die Überführung eines Werkstückträgers anstelle einzelner Werkstücke zu den Bearbeitungseinrichtungen erweist sich dann als vorteilhaft, wenn die Bearbeitungseinrichtungen selbst über geeignete Handhabungssysteme verfügen, um verschiedene Werkstücke eines Werkstückträgers nacheinander abzuarbeiten.

Bei einer weiteren Variante der zuvor beschriebenen Verfahren werden die Werkstücke von den Werkstückträgern in der Zuführposition von der Ladevorrichtung übernommen und zu einer nachgeordneten Bearbeitungs- oder Speichereinrichtung überführt und die Werkstückträger leer in die Bereitstellungsposition zurückgestapelt.

Auf diese Weise kann das erfindungsgemäße Verfahren dazu benutzt werden, eine Speichereinrichtung, eine Transferstraße, eine Glühstraße oder dergleichen lediglich mit Werkstücken oder Werkstückträgern zu beschicken, während die Werkstückträger leer zurückgestapelt werden.

Selbstverständlich ist auch der umgekehrte Fall möglich, daß nämlich Werkstücke aus einer Speichereinrichtung, einer Transferstraße oder einer Bearbeitungseinrichtung entnommen werden können, die auf den anfangs leeren Werkstückträgern abgelegt werden.

In vorteilhafter Weise kann die Ladevorrichtung gemäß dem erfindungsgemäßen Verfahren auch mit mehreren Bearbeitungs- oder Speichereinrichtungen gekoppelt werden, denen die Werkstücke oder Werkstückträger wahlweise zugeführt werden.

In weiter vorteilhafter Ausgestaltung des erfindungsgemäßen Verfahrens werden die gestapelten Werkstückträger zwischen der Lade-/Entladeposition und der Bereitstellungsposition durch eine Drehbewegung um eine vertikale Achse übergeben.

Gemäß einer weiteren Ausgestaltung der Erfindung werden die Werkstückträger in der Stapelwechseleinheit auf Rollwagen bewegt.

Auf diese Weise können die ohnehin zum Transport von Werkstückträgerstapeln verwendeten Rollwagen gleichermaßen vorteilhaft in der Stapelwechseleinheit verwendet werden, so daß eine Aufnahme des Gewichtes des Werkstückträgerstapels durch die Stapelwechseleinheit selbst nicht erforderlich ist.

Die Erfindung wird anhand der nachfolgenden Beschreibung eines bevorzugten Ausführungsbeispiels unter Bezugnahme auf die Zeichnung näher erläutert. Es zeigen:
- Fig. 1: eine Aufsicht eines erfindungsgemäßen Handhabungssystems in vereinfachter, stark schematischer Darstellung und
- Fig. 2: eine perspektivische Ansicht des Handhabungssystems gemäß Fig. 1 in vereinfachter Darstellung.

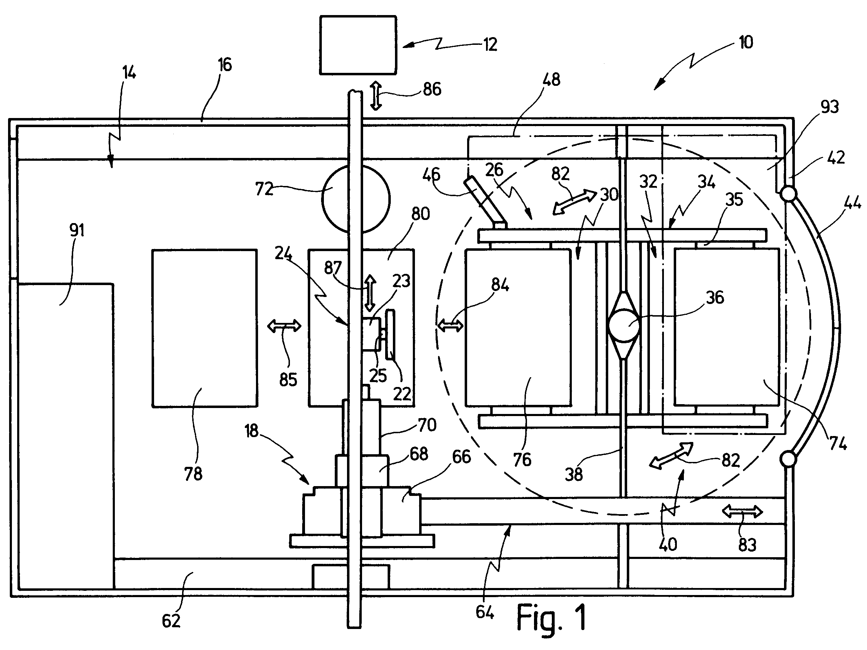

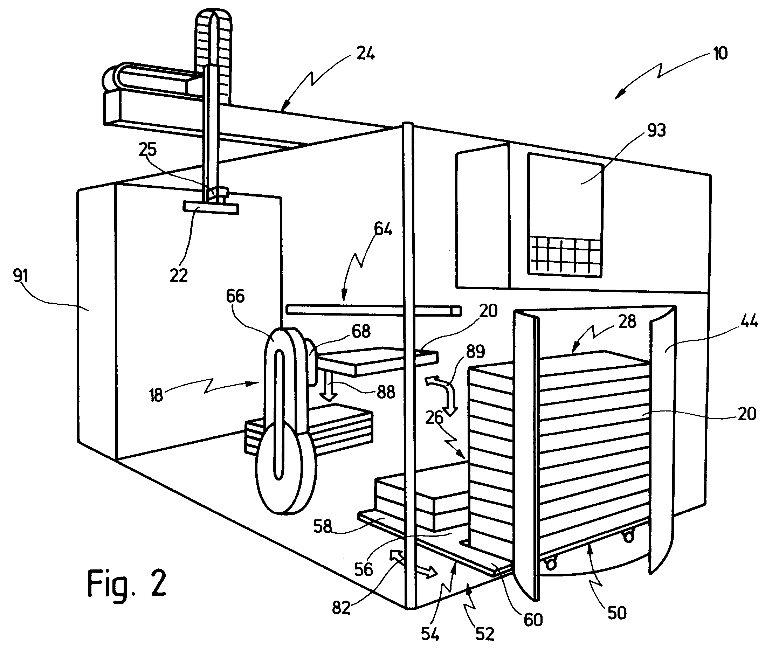

Ein erfindungsgemäßes Handhabungssystem ist in den Figuren 1 und 2 insgesamt mit der Ziffer 10 bezeichnet.

Die einzelnen Komponenten des Handhabungssystems 10 sind auf einem gemeinsamen Grundrahmen 62 montiert. Auf dem Grundrahmen 62 ist auch eine äußere Schutzwand 16 vorgesehen, durch die ein Arbeitsraum 14 nach außen abgegrenzt ist.

Der Arbeitsraum 14 ist durch einen Schutzwandabschnitt 38 in nachfolgend noch näher erläuterter Weise gegen einen Laderaum 40 abgegrenzt, der nach außen durch eine zweite Schutzwand 42 begrenzt ist, in der zwei nach außen öffnende gebogene Ladetüren 44 vorgesehen sind.

Innerhalb des Arbeitsraumes 14 ist eine Stapelbereitstellungsvorrichtung 18 vorgesehen, die als Palettenumsetzvorrichtung ausgebildet ist. Die Stapelbereitstellungsvorrichtung 18 weist einen in Vertikalrichtung und in Horizontalrichtung bewegbaren Ausleger mit einer ersten Schwinge 66 auf, an der eine zweite Schwinge 68 getrieblich derart zwangsgekoppelt gehalten ist, daß die zweite Schwinge 68 mit ihrem freien Ende 70 bei Drehung der ersten Schwinge 66 eine Ortskurve mit weitgehend linearen horizontalen und vertikalen Abschnitten beschreibt.

Die Stapelbereitstellungsvorrichtung 18 benötigt demnach nur eine gesteuerte Achse und kann einzelne Werkstückträger 20 von einem ersten Werkstückträgerstapel aufnehmen, vertikal nach oben bewegen, dann weiter auf einer horizontalen Bahn bewegen und schließlich auf einem anderen Stapel wieder absetzen.

Oberhalb der durch die äußere Schutzwand 16 abgeschlossenen Zelle ist eine Ladevorrichtung 24 angeordnet, die nur schematisch dargestellt ist und als Ladeportal ausgebildet ist, an dem ein entlang des Ladeportals verfahrbarer Schlitten 23 vorgesehen ist, der einen in Vertikalrichtung verfahrbaren Greifer 25 zur Aufnahme eines Werkstückes 22 trägt.

Neben der Stapelbereitstellungsvorrichtung 18 ist eine Stapelwechseleinheit vorgesehen, die insgesamt mit der Ziffer 26 bezeichnet ist. Die Stapelwechseleinheit 26 weist einen ersten Bereich 30 innerhalb des Arbeitsraums 14 auf, sowie einen zweiten Bereich 32 innerhalb des Laderaums 40, der dem ersten Bereich 30 gegenüberliegt. Die Stapelwechseleinheit 26 besitzt einen Drehtisch 34 mit vertikaler Achse 36, mittels dessen Werkstückträger 20 zwischen dem ersten Bereich 30 und dem zweiten Bereich 32 durch Verdrehung um die vertikale Achse 36 mittels eines motorischen Antriebes verfahrbar sind.

Der Drehtisch 34 ist als H-förmiges Drehgestell 54 mit einem gemeinsamen Mittelabschnitt 56 und mit zwei vom Mittelabschnitt 56 jeweils nach außen weisenden U-förmigen Abschnitten 58, 60 ausgebildet.

Wie in Fig. 2 erkennbar, kann ein Werkstückträgerstapel 28 bei geöffneten Türen 44 der zweiten Außenwand 42 in den Laderaum 40 in den U-förmigen Abschnitt 60 des Drehgestells 54 eingefahren und dort verriegelt werden (nicht dargestellt). Dabei steht der Werkstückträgerstapel 28 auf einem Rollwagen 50, so daß keine zusätzliche Transportvorrichtung erforderlich ist. Auch wahrend des Wechsels zwischen dem ersten Bereich 30 und dem zweiten Bereich 32 bleibt der Werkstückträgerstapel 28 auf dem Rollwagen 50 stehen, so daß das Drehgestell 54 lediglich zur Aufnahme der seitlichen Stützkräfte und des Drehantriebes ausgelegt sein muß, nicht jedoch zur Aufnahme des Gewichtes des Werkstückträgerstapels 28 und der Werkstücke 22.

Der Arbeitsraum 14 ist durch die äußere Schutzwand 16 vollständig nach außen und durch den auf den Drehtisch integrierten Schutzwandabschnitt 38 gegenüber dem Laderaum 40 begrenzt.

Durch die vollständige Einschließung des Arbeitsraums 14 wird so ein vollständiger Unfallschutz gewährleistet, da ein Eingreifen in den Arbeitsraum 14 von außen während des Betriebes des Handhabungssystems 10 nicht ermöglicht ist. Der Schutzwandabschnitt 38 ist auf dem Drehtisch 34 integriert und trennt die beiden U-förmigen Abschnitte 58, 60 an dem Mittelabschnitt 56 voneinander.

Durch eine dem Drehtisch 34 zugeordnete Verriegelungseinheit, die über eine Verbindungsleitung 48 mit den Ladetüren 44 gekoppelt ist, ist sichergestellt, daß die Ladetüren 44 nur dann von außen geöffnet werden können, wenn sich die Stapelwechseleinheit 26 in der in Fig. 1 dargestellten Position befindet, so daß der Arbeitsraum 14 gegenüber dem Laderaum 40 vollständig durch den auf dem Drehtisch 34 befindlichen Schutzwandabschnitt 38 getrennt ist. Auf diese Weise wird erreicht, daß während des Betriebes des Handhabungssystems 10 innerhalb des Arbeitsraums 14 gefahrlos ein Wechsel der Werkstückträgerstapel 28 bei geöffneten Ladetüren 44 durchgeführt werden kann. Ist ein Werkstückträgerstapel 28 auf einem Rollwagen 50 in den U-förmigen Abschnitt 60 des Drehgestells 54 eingefahren und durch eine mit der Ziffer 35 angedeutete Verriegelungseinheit am Drehgestell 54 verriegelt, so kann der Werkstückträgerstapel 28 aus dieser in Fig. 1 dargestellten Lade-/Entladeposition durch Verdrehung des Drehtisches 34 um 180° in eine mit der Ziffer 76 angedeutete Bereitstellungsposition innerhalb des Arbeitsraums 14 verdreht werden. Ist diese Position erreicht und die Verriegelungseinheit 46 wieder verriegelt, so ist der Arbeitsraum 14 vollständig gegenüber dem Laderaum 40 abgesichert, so daß ein Werkstückträgerstapel 28 mit zuvor bearbeiteten Werkstücken 22 nach Öffnen der Ladetüren 44 aus dem Laderaum 40 herausgefahren und gegen einen Werkstückträgerstapel 28 mit unbearbeiteten Werkstücken 22 ausgetauscht werden kann.

Ist ein Werkstückträgerstapel 28 durch Verdrehen des Drehtisches 34 in Richtung der Pfeile 82 in die Bereitstellungsposition 76 transportiert, so können mittels der Stapelbereitstellungsvorrichtung 18 dann von dem Werkstückträgerstapel 28 in der Bereitstellungsposition 76 von oben Werkstückträger 20 abgenommen, vertikal nach oben (Pfeil 89) und dann weiter in Pfeilrichtung 84 gemäß Fig. 1 zu einer Zuführposition 80 unterhalb der Ladevorrichtung 24 bewegt werden oder weiter in Pfeilrichtung 85 (Fig. 1) in horizontaler Richtung und schließlich wieder in vertikaler Richtung (Pfeil 88) gemäß Fig. 2 nach unten bewegt werden, um in einer der Bereitstellungsposition 76 gegenüberliegenden Warteposition 78 (Fig. 1) abgesetzt zu werden. Aus der Zuführposition 80 können mittels des Greifers 25 der Ladevorrichtung 24 einzelne Werkstücke 22 oder auch vollständige Werkstückträger 20 übernommen und zu einer nachgeordneten Bearbeitungseinrichtung, die durch die Ziffer 12 lediglich schematisch angedeutet ist, in Richtung der Pfeile 86, 87 verfahren werden, um dort bearbeitet zu werden und nach Bearbeitung wieder mittels der Ladevorrichtung übernommen zu werden.

Auf dem gemeinsamen Grundrahmen 62 sind ferner noch ein Schaltschrank 91 und eine Steuereinheit 93 montiert, so daß insgesamt eine kompakte Automationszelle zur Handhabung entsteht.

Zusätzlich kann innerhalb dieser Automationszelle noch eine Vorrichtung zur Behandlung oder Bearbeitung von Werkstücken vorgesehen sein, die schematisch durch die Ziffer 72 angedeutet ist. Hierbei könnte es sich beispielsweise um eine Wascheinrichtung handeln. Unterhalb der Ladevorrichtung 24 kann ferner eine Bearbeitungseinrichtung, beispielsweise eine Wasserstrahlschneideinrichtung angeordnet sein, wobei eine Bewegung des Werkstückes durch die Ladevorrichtung 24 in zwei Achsen erreicht wird, nämlich in Richtung des Pfeiles 86 und in Vertikalrichtung, während eine Bewegung in einer dritten horizontalen Achse, nämlich in Richtung der Pfeile 84, 85 durch die Stapelbereitstellungsvorrichtung 18 erreicht wird.

Die Steuerung des gesamten Handhabungssystems 10 wird über die Steuereinheit 93 vorgenommen, deren Bedienungskonsole oberhalb der Ladetüren 44 von außen zugänglich angeordnet ist.

Ferner weist das Handhabungssystem 10 noch eine Ein- und Ausschleuseinrichtung auf, die in den Figuren 1 und 2 schematisch mit der Ziffer 64 angedeutet ist, und über die einzelne Werkstücke 22 beispielsweise für Prüfzwecke aus dem Arbeitsraum 14 und durch den Laderaum 40 in Pfeilrichtung 83 nach außen aus- bzw. eingeschleust werden können.

Das Handhabungssystem 10 kann, wie in Fig. 1 schematisch dargestellt, mit einer Bearbeitungs- oder Speichereinrichtung 12 oder auch mit mehreren Bearbeitungs- oder Speichereinrichtungen gekoppelt sein, wobei die Verbindung durch die Ladevorrichtung 24 erreicht wird, die - soweit möglich - gleichfalls auf dem Grundrahmen 62 montiert sein kann oder aber, wenn größere Entfernungen zu überbrücken sind, natürlich auch außerhalb befestigt sein kann.

Die Arbeitsweise des Handhabungssystems 10 ist die folgende:
Zunächst wird bei geöffneten Ladetüren 44 ein Werkstückträgerstapel 28 mit unbearbeiteten Werkstücken 22 in den U-förmigen Abschnitt 60 des Drehtisches 34 auf dem Rollwagen 50 eingefahren und verriegelt. Nach Verlassen des Laderaums 40 durch das Bedienungspersonal werden die Ladetüren 44 von außen geschlossen, und der Drehtisch 34 kann in Pfeilrichtung 82 verdreht werden, um den Werkstückträgerstapel 28 in die Bereitstellungsposition 76 innerhalb des Arbeitsraums 14 zu bringen. Von hier aus kann mittels der Stapelbereitstellungsvorrichtung 18 zunächst der gesamte Werkstückträgerstapel 28 aus der Bereitstellungsposition 76 in die gegenüberliegende Warteposition 78 umgestapelt werden, um so Platz an der Bereitstellungsposition 76 für Werkstückträger 20 nach Bearbeitung der Werkstücke 22 zu schaffen.

Bei dieser ersten Verfahrensvariante ist während dieser Umstapelzeit aus der Bereitstellungsposition 76 in die Warteposition 78 kein Beschicken der angeschlossenen Bearbeitungseinrichtung 12 mit Werkstücken 22 oder Werkstückträgern 20 möglich. Nach Beendigung des Umstapelvorgangs werden von oben einzelne Werkstückträger 20 abgenommen und mittels der Stapelbereitstellungsvorrichtung 18 in die Zuführposition 80 bewegt, von der aus entweder einzelne Werkstücke 22 mittels der Ladevorrichtung 24 entnommen werden können oder aber der gesamte Werkstückträger 20 übernommen werden kann und zu der Bearbeitungseinrichtung 12 überführt werden kann. Nach Bearbeitung der Werkstücke 22 in der Bearbeitungseinrichtung 12 werden die einzelnen Werkstücke 22 wieder mittels der Ladevorrichtung 24 auf dem Werkstückträger 20 abgelegt, oder der leere Werkstückträger 20 wird wieder in der Zuführposition 80 an die Stapelbereitstellungsvorrichtung 18 übergeben und in die Bereitstellungsposition 76 zurückgestapelt. Auf diese Weise werden so nacheinander die einzelnen Werkstückträger 20 aus der Warteposition 78 von oben abgearbeitet und schließlich wieder in die Bereitstellungsposition 76 zurückgestapelt. Nach abgeschlossener Bearbeitung des Werkstückträgerstapels 28 kann dieser durch Verdrehung des Drehtisches 34 in Pfeilrichtung 82 bei geschlossenen Ladetüren 44 wieder in den Laderaum 40 transportiert werden, wobei ein bereits vorher im Laderaum 40 in das Drehgestell 54 eingesetzter Werkstückträgerstapel 28 gleichzeitig wieder in die Bereitstellungsposition 76 in dem Arbeitsraum 14 überführt wird, so daß ein weiterer Betrieb ohne Zeitverlust ermöglicht ist. Es versteht sich, daß nicht notwendigerweise dieselben Werkstücke 22 einer Art wieder auf demselben Werkstückträger 20 abgelegt werden müssen, sondern daß infolge der Bearbeitungszeit der Werkstücke 22 auch Werkstücke 22 eines Werkstückträgers 20 auf dem nachfolgenden Werkstückträger wieder abgelegt werden können.

Bei einer Variante dieses Verfahrens kann auf den Umstapelvorgang aus der Bereitstellungsposition 76 in die Warteposition 78 verzichtet werden, um einzelne Werkstückträger 20 aus der Bereitstellungsposition 76 unmittelbar aufzunehmen und in die Zuführposition 80 zu überführen. In der Zuführposition 80 wird nur ein Teil der Werkstücke 22 entnommen und nach Bearbeitung in der Bearbeitungseinrichtung 12 wieder auf dem Werkstückträger 20 abgelegt. Der Werkstückträger 20 wird anschließend in der Warteposition 78 abgelegt. Danach werden die übrigen Werkstückträger 20 aus der Bereitstellungsposition 76 entnommen, in die Zuführposition 80 überführt, dann ein Teil der Werkstücke 22 bearbeitet und schließlich in der Warteposition 78 abgelegt, bis alle Werkstückträger 20 in die Warteposition 78 umgestapelt sind. Dabei wird zweckmäßigerweise der letzte Werkstückträger 20 gleich vollständig bearbeitet und dann wieder in die Bereitstellungsposition 76 zurückgestapelt. Anschließend werden die übrigen Werkstückträger 20 aus der Warteposition 78 entnommen, in die Zuführposition 80 bewegt und nach Abarbeitung der restlichen Werkstücke 22 wieder in die Bereitstellungsposition 76 zurückgestapelt. Anschließend kann dann wieder in der zuvor beschriebenen Weise ein Wechsel der Werkstückträgerstapel 28 durch Verdrehung des Drehtisches 34 um 180° durchgeführt werden.

Ferner ist es möglich, durch eine besondere Arbeitsfolge bei der Entnahme und Zuführung von bearbeiteten und unbearbeiteten Werkstücken in Zusammenwirken mit der Stapelwechseleinheit 26 und der Stapelbereitstellungsvorrichtung 18 auch bei einem Typenwechsel von Werkstücken zwischen zwei nacheinander zugeführten Werkstückträgerstapeln sicherzustellen, daß alle Werkstücke eines bestimmten Typs auch nach der Bearbeitung wieder auf denselben Werkstückträgerstapeln abgelegt werden.

## Patentansprüche

1. Handhabungssystem zur Handhabung von Werkstücken, mit einem Arbeitsraum (14), der durch eine Schutzwand (16) nach außen abgeschlossen ist und innerhalb dessen eine Stapelbereitstellungsvorrichtung (18) zum Bereitstellen von Werkstückträgern (20) mit unbearbeiteten Werkstücken (22) und zur Aufnahme von Werkstückträgern (20) nach Bearbeitung vorgesehen ist, mit einer der Stapelbereitstellungsvorrichtung (18) zugeordneten Ladevorrichtung (24) zur Übernahme von unbearbeiteten Werkstücken (22) oder Werkstückträgern (20) mit unbearbeiteten Werkstücken (22) und zur Aufnahme von Werkstücken (22) oder Werkstückträgern (20) nach Bearbeitung, gekennzeichnet durch eine Stapelwechseleinheit (26) zur Zuführung von Werkstückträgerstapeln (28) mit unbearbeiteten Werkstücken (22) zu der Stapelbereitstellungsvorrichtung (18) und zur Entnahme von Werkstückträgerstapeln (28) nach Bearbeitung von der Stapelbereitstellungsvorrichtung (18), wobei die Stapelwechseleinheit (26) einen ersten Bereich (30) innerhalb des Arbeitsraums (14) zur Bereitstellung von Werkstückträgerstapeln (28) für die Stapelbereitstellungsvorrichtung (18) und einen zweiten Bereich (32) aufweist, der außerhalb des Arbeitsraums (14) einen Laderaum (40) zur Zuführung und zur Entnahme von Werkstückträgerstapeln (28) von außen bildet, wobei die Stapelwechseleinheit (26) einen Drehtisch (34) mit vertikaler Achse (36) zum Transport der Werkstückträger (20) zwischen dem ersten (30) und dem zweiten (32) Bereich aufweist, und wobei der Arbeitsraum (14) im Bereich der Stapelwechseleinheit (26) durch einen Schutzwandabschnitt (38) begrenzt ist, der mit dem Drehtisch (34) verbunden und gemeinsam mit diesem verdrehbar ist.

2. Handhabungssystem nach Anspruch 1, dadurch gekennzeichnet, daß der Laderaum (40) durch eine zweite Schutzwand (42) nach außen abgetrennt ist, in der mindestens eine Ladetür (44) zum Be- und Entladen von Werkstückträgerstapeln (28) vorgesehen ist, und bei dem der Drehtisch (34) mit einer Verriegelungseinheit (46) gekoppelt ist, um nur bei geschlossenem Schutzwandabschnitt (38) ein Öffnen der Ladetür (44) von außen zu ermöglichen.

3. Handhabungssystem nach Anspruch 1 oder 2, dadurch gekennzeichnet, daß die Werkstückträger (20) in der Stapelwechseleinheit (26) auf Rollwagen (50) gehalten sind, die mittels des Drehtisches (34) auf dem Boden (52) zwischen dem ersten (30) und zweiten (32) Bereich verfahrbar sind.

4. Handhabungssystem nach einem der vorhergehenden Ansprüche, dadurch gekennzeichnet, daß der Drehtisch (34) als H-förmiges Drehgestell (54) mit einem gemeinsamen Mittelabschnitt (56) und zwei vom Mittelabschnitt (56) jeweils nach außen weisenden U-förmigen Abschnitten (58, 60) ausgebildet ist.

5. Handhabungssystem nach einem der Ansprüche 2-4, dadurch gekennzeichnet, daß die Stapelbereitstellungsvorrichtung (18), die Stapelwechseleinheit (26), die Schutzwand (16) und die zweite Schutzwand (42) auf einem gemeinsamen Grundgestell (62) vorgesehen sind.

6. Handhabungssystem nach Anspruch 5, dadurch gekennzeichnet, daß die Ladevorrichtung (24) auf dem Grundgestell (62) gehalten und als Ladeportal oder als Roboter ausgebildet ist.

7. Handhabungssystem nach einem der vorhergehenden Ansprüche, dadurch gekennzeichnet, daß eine Einrichtung (64) zum Aus- und Einschleusen von Werkstücken (22) aus dem Arbeitsraum (14) vorgesehen ist.

8. Handhabungssystem nach einem der vorhergehenden Ansprüche, dadurch gekennzeichnet, daß die Stapelbereitstellungsvorrichtung (18) als Palettenumsetzvorrichtung ausgebildet ist, die einen in Vertikalrichtung und in Horizontalrichtung bewegbaren Ausleger mit einer ersten Schwinge (66) aufweist, an der eine zweite Schwinge (68) getrieblich derart zwangsgekoppelt gehalten ist, daß die zweite Schwinge (68) mit ihrem freien Ende (70) bei Drehung der ersten Schwinge (66) eine Ortskurve mit weitgehend linearen horizontalen und vertikalen Abschnitten beschreibt.

9. Handhabungssystem nach einem der vorhergehenden Ansprüche, dadurch gekennzeichnet, daß innerhalb des Arbeitsraums (14) eine Vorrichtung (72) zur Behandlung oder Bearbeitung von Werkstücken (22) vorgesehen ist.

10. Verfahren zur Handhabung von Werkstücken mit einem Handhabungssystem nach einem der vorhergehenden Ansprüche mit folgenden Schritten:
(a) zuführen einer Mehrzahl von übereinandergestapelten Werkstückträgern (20) mit unbearbeiteten Werkstücken (22) in eine Lade-/Entladeposition (74) einer Stapelwechseleinheit (26);
(b) Überführen der übereinandergestapelten Werkstückträger (20) von der Lade-/Entladeposition (74) mittels der Stapelwechseleinheit (26) in eine Bereitstellungsposition (76) für eine nachfolgende Stapelbereitstellungsvorrichtung (18);
(c) Umstapeln aller Werkstückträger (20) aus der Bereitstellungsposition (76) der Stapelwechseleinheit (26) in eine Warteposition (78) der Stapelbereitstellungsvorrichtung (18) an einen freien Platz;
(d) Aufnehmen eines Werkstückträgers (20) aus der Warteposition (78) und Überführen in eine Zuführposition (80) für eine Ladevorrichtung (24);
(e) Überführen eines Werkstückes (22) aus der Zuführposition (80) mittels der Ladevorrichtung (24) zu einer nachgeordneten Bearbeitungseinrichtung (12);
(f) Übernehmen des Werkstückes (22) nach Bearbeitung von der Ladevorrichtung (24) in der Zuführposition (80) durch die Stapelbereitstellungsvorrichtung (18);
(g) Wiederholen der Schritte (e) bis (f), bis alle Werkstücke (22) eines Werkstückträgers (20) bearbeitet sind;
(h) Überführen des Werkstückträgers (20) mit bearbeiteten Werkstücken (22) in die Bereitstellungsposition (76) der Stapelwechseleinheit (26);
(i) Wiederholen der Schritte (d) bis (h), bis alle Werkstückträger (20) von der Warteposition (78) in die Bereitstellungsposition (76) umgestapelt sind;
(j) Überführen der Werkstückträger (20) mit bearbeiteten Werkstücken (22) aus der Bereitstellungposition (76) in die Lade-/Entladeposition (74) der Stapelwechseleinheit (26).

11. Verfahren zur Handhabung von Werkstücke mit einem Handhabungssystem nach einem der Ansprüche 1-9, mit folgenden Schritten:
(a) Zuführen einer Mehrzahl von übereinandergestapelten Werkstückträgern (20) mit unbearbeiteten Werkstücken (22) in eine Lade-/Entladeposition (74) einer Stapelwechseleinheit (26);
(b) Überführen der übereinandergestapelten Werkstückträger (20) von der Lade-/Entladeposition (74) mittels der Stapelwechseleinheit (26) in eine Bereitstellungsposition (76) für eine nachfolgende Stapelbereitstellungsvorrichtung (18);
(c) Aufnehmen eines Werkstückträgers (20) aus der Bereitstellungsposition (76) und Überführen in eine Zuführposition (80) für eine Ladevorrichtung (24);
(d) Überführen eines Werkstückes (22) mittels der Ladevorrichtung (24) zu einer nachgeordneten Bearbeitungseinrichtung (12);
(e) Übernehmen des Werkstückes (22) nach Bearbeitung von der Ladevorrichtung (24) in der Zuführposition (80) durch die Stapelbereitstellungsvorrichtung (18);
(f) Wiederholen der Schritte (d) bis (e), bis ein Teil der Werkstücke (22) bearbeitet ist;
(g) Überführen des Werkstückträgers (20) mit Werkstücken (22), von denen ein Teil bearbeitet ist, in eine Warteposition (78) der Stapelwechseleinheit (26);
(h) Wiederholen der Schritte (c) bis (g), bis alle Werkstückträger (20) von der Bereitstellungsposition (76) in die Warteposition (78) umgestapelt sind;
(i) Aufnehmen eines Werkstückträgers (20) aus der Warteposition (78) und Überführen in die Zuführposition (80) für die Ladevorrichtung (24);
(j) Überführen eines Werkstückes (22) mittels der Ladevorrichtung (24) zu der nachgeordneten Bearbeitungseinrichtung (12);
(k) Übernehmen des Werkstückes (22) nach Bearbeitung von der Ladevorrichtung (24) in der Zuführposition (80) durch die Stapelbereitstellungsvorrichtung (18);
(l) Wiederholen der Schritte (j) bis (k), bis alle Werkstücke (22) eines Werkstückträgers (20) bearbeitet sind;
(m) Überführen des Werkstückträgers (20) mit bearbeiteten Werkstücken (22) aus der Zuführposition (80) in die Bereitstellungsposition (76);
(n) Wiederholen der Schritte (i) bis (m), bis alle Werkstückträger (20) aus der Warteposition (78) in die Bereitstellungsposition (76) zurückgestapelt sind;
(o) Überführen der Werkstückträger (20) mit bearbeiteten Werkstücken (22) aus der Bereitstellungposition (76) in die Lade-/Entladeposition (74) der Stapelwechseleinheit (26).

12. Verfahren zur Handhabung von Werkstücken mit einem Handhabungssystem nach einem der Ansprüche 1-9, mit folgenden Schritten:
(a) Zuführen einer Mehrzahl von übereinandergestapelten Werkstückträgern (20) mit unbearbeiteten Werkstücken (22) in eine Lade-/Entladeposition (74) einer Stapelwechseleinheit (26);
(b) Überführen der übereinandergestapelten Werkstückträger (20) von der Lade-/Entladeposition (74) mittels der Stapelwechseleinheit (26) in eine Bereitstellungsposition (76) für eine nachfolgende Stapelbereitstellungsvorrichtung (18);
(c) Umstapeln aller Werkstückträger (20) aus der Bereitstellungsposition (76) der Stapelwechseleinheit (26) in eine Warteposition (78) der Stapelbereitstellungsvorrichtung (18) an einen freien Platz;
(d) Aufnehmen eines Werkstückträgers (20) aus der Warteposition (78) und Überführen in eine Zuführposition (80) für eine Ladevorrichtung (24);
(e) Überführen des Werkstückträgers (20) aus der Zuführposition (80) mittels der Ladevorrichtung (24) zu einer nachgeordneten Bearbeitungseinrichtung (12);
(f) Übernehmen des Werkstückträgers (20) nach Bearbeitung von der Ladevorrichtung (24) in der Zuführposition (80) durch die Stapelbereitstellungsvorrichtung (18);
(g) Überführen des Werkstückträgers (20) mit bearbeiteten Werkstücken (22) in die Bereitstellungsposition (76) der Stapelwechseleinheit (26);
(h) Wiederholen der Schritte (d) bis (g), bis alle Werkstückträger (20) von der Warteposition (78) in die Bereitstellungsposition (76) zurückgestapelt sind;
(i) Überführen der Werkstückträger (20) mit bearbeiteten Werkstücken (22) aus der Bereitstellungposition (76) in die Lade-/Entladeposition (74) der Stapelwechseleinheit (26).

13. Verfahren zur Handhabung von Werkstücken mit einem Handhabungssystem nach einem der Ansprüche 1-9, mit folgenden Schritten:
(a) Zuführen einer Mehrzahl von übereinandergestapelten Werkstückträgern (20) mit unbearbeiteten Werkstücken (22) in eine Lade-/Entladeposition (74) einer Stapelwechseleinheit (26);
(b) Überführen der übereinandergestapelten Werkstückträger (20) von der Lade-/Entladeposition (74) mittels der Stapelwechseleinheit (26) in eine Bereitstellungsposition (76) für eine nachfolgende Stapelbereitstellungsvorrichtung (18);
(c) Aufnehmen eines Werkstückträgers (20) aus der Bereitstellungsposition (76) und Überführen in eine Zuführposition (80) für eine Ladevorrichtung (24);
(d) Überführen des Werkstückträgers (20) aus der Zuführposition (80) mittels der Ladevorrichtung (24) zu einer nachgeordneten Bearbeitungseinrichtung (12);
(e) Übernehmen des Werkstückträgers (20) nach Bearbeitung von der Ladevorrichtung (24) in der Zuführposition (80) durch die Stapelbereitstellungsvorrichtung (18);
(f) Überführen des Werkstückträgers (20) mit bearbeiteten Werkstücken (22) in eine Warteposition (78) der Stapelwechseleinheit (26);
(g) Wiederholen der Schritte (c) bis (f), bis alle Werkstückträger (20) von der Bereitstellungsposition (76) in die Warteposition (78) umgestapelt sind;
(h) Zurückstapeln aller Werkstückträger (20) aus der Warteposition (78) in die Bereitstellungsposition (76);
(i) Überführen der Werkstückträger (20) mit bearbeiteten Werkstücken (22) aus der Bereitstellungposition (76) in die Lade-/Entladeposition (74) der Stapelwechseleinheit (26).

14. Verfahren nach einem der Ansprüche 10 bis 13, bei dem die Werkstücke (22) von den Werkstückträgern (20) in der Zuführposition (80) von der Ladevorrichtung (24) übernommen und zu einer nachgeordneten Bearbeitungs- oder Speichereinrichtung (12) überführt werden und die Werkstückträger (20) leer in die Bereitstellungsposition (76) zurückgestapelt werden.

15. Verfahren nach einem der Ansprüche 10 bis 13, bei dem die Werkstücke (22) in der Zuführposition (80) von der Ladevorrichtung (24) von einer nachgeordneten Bearbeitungs- oder Speichereinrichtung (12) übernommen werden und die anfangs leeren Werkstückträger (20) zumindest teilweise gefüllt in die Bereitstellungsposition (76) zurückgestapelt werden.

16. Verfahren nach einem der Ansprüche 10 bis 15, bei dem die Ladevorrichtung (24) mit mehreren Bearbeitungs- oder Speichereinrichtungen (12) gekoppelt ist, denen die Werkstücke (22) oder Werkstückträger (20) wahlweise zugeführt werden.

17. Verfahren nach einem der Ansprüche 10 bis 16, bei dem die gestapelten Werkstückträger (20) zwischen der Lade-/Entladeposition (74) und der Bereitstellungsposition (76) durch eine Drehbewegung um eine vertikale Achse (36) übergeben werden.

18. Verfahren nach Anspruch 17, bei dem die Werkstückträger (20) in der Stapelwechseleinheit (26) auf Rollwagen (50) bewegt werden.

## Claims

1. Handling system for feeding workpieces to a subsequent machining unit (12) having a working area (14) which is enclosed toward the outside by a protective wall (16) and in which a stack presentation device (18) is provided for presenting workpiece carriers (20) with unmachined workpieces (22) and for receiving workpiece carriers (20) after the machining operation, having a loading device (24) assigned to the stack presentation device (18) for transferring unmachined workpieces (22) or workpiece carriers (20) with unmachined workpieces (22), and for receiving workpieces (22) after the machining operation, characterized by a stack-changing unit (26) for feeding workpiece carrier stacks (28) with unmachined workpieces (22) to the stack presentation device (18) and for removing workpiece carrier stacks (28) from the stack presentation device (18) after the machining operation, the stack-changing unit (26) having a first area (30) within the working area (14) for presenting workpiece carrier stacks (28) to the stack presentation device (18), and a second area (32) forming a loading space (40) outside the working area (14) for feeding in and removing workpiece carrier stacks (28) from the outside, wherein the stack-changing unit (26) comprises a rotary table (34), with a vertically extending axis (36), for transferring the workpiece carriers (20) between the first (30) and the second (32) areas, and wherein the working area (14) is delimited in the area of the stack-changing unit (26) by a section (38) of a protective wall which is connected with the rotary table (34) and mounted for rotation therewith.

2. Handling system according to claim 1, characterized in that the loading space (40) is separated from the outside by a second protective wall (42) comprising at least one loading door (44) through which workpiece carrier stacks (28) can be loaded and unloaded, and the rotary table (34) is coupled with locking means (46) so that the loading door (44) can be opened from the outside only in the closed condition of the protective wall section (38).

3. Handling system according to claim 1 or 2, characterized in that the workpiece carriers (20) are disposed in the stack-changing unit (26) on trolleys (50) that can be displaced on the floor (52) between the first (30) and the second (32) areas by means of the rotary table (34).

4. Handling system according to one of the preceding claims, characterized in that the rotary table (34) is configured as a H-shaped rotary frame (54) comprising a common central section (56) and two U-shaped sections (58, 60) projecting from the central section (56) to the outside.

5. Handling system according to one of claims 2 - 4, characterized in that the stack presentation device (18), the stack-changing unit (26), the protective wall (26) and the second protective wall (42) are mounted on a common frame (62).

6. Handling system according to claim 5, characterized in that the loading device (24) is mounted on the frame (62) and is configured as a loading gantry or as a robot.

7. Handling system according to one of the preceding claims, characterized in that means (64) for introducing and for removing workpieces (22) from the working area (14) are provided.

8. Handling system according to one of the preceding claims, characterized in that the stack presentation device (18) is configured as a pallet transfer device comprising an extension arm, that can be moved in vertical and in horizontal direction, with a first link (66) on which a second link (68) is drivingly and positively coupled in such a way that when the first link (68) is rotated, the free end (70) of the second link (68) describes a path comprised of essentially linear horizontal and vertical sections.

9. Handling system according to one of the preceding claims, characterized in that a device (72) for treating or processing workpieces (22) is provided within the working area (14).

10. Method of handling workpieces utilizing a handling system according to one of the preceding claims and comprising the following steps:
(a) Feeding a plurality of workpiece carriers (20), containing unmachined workpieces (22) and being stacked one on top of the other, to a loading/unloading position (74) of a stack-changing unit (26);
(b) transferring the stacked workpiece carriers (20) by means of the stack-changing device (26) from the loading/unloading position (74) to a stack-presentation position (76) for a subsequent stack presentation device (18);
(c) re-stacking all workpiece carriers (20) from the stack-presentation position (76) of the stack presentation device (26) to a waiting position (78) of the stack presentation device (18) in a free location;
(d) picking up a workpiece carrier (20) from the waiting position (78) and transferring it to a feeding position (80) for a loading device (24);
(e) transferring a workpiece (22) from the feeding position (80) to a subsequent machining unit (12), by means of the loading device (24);
(f) upon completion of the machining operation, picking up the workpiece (22) from the loading device (24) in the feeding position (80) by the stack presentation device (18);
(g) repeating the steps (e) to (f) until all workpieces (22) of a workpiece carrier (20) have been worked off;
(h) transferring the workpiece carrier (20), with the machined workpieces (22), to the stack-presentation position (76) of the stack-changing unit (26);
(i) repeating the steps (d) to (h) until all workpiece carriers (20) have been re-stacked from the waiting position (78) to the stack-presentation position (76);
(j) transferring the workpiece carriers (20), with the machined workpieces (22), from the stack-presentation position (76) to the loading/unloading position (74) of the stack-changing unit (26).

11. Method of handling workpieces utilizing a handling system according to one of claims 1 - 9 and comprising the following steps:
(a) Feeding a plurality of workpiece carriers (20), containing unmachined workpieces (22) and being stacked one on top of the other, to a loading/unloading position (74) of a stack-changing unit (26);
(b) transferring the stacked workpiece carriers (20) from the loading/unloading position (74) to a stack-presentation position (76) for a subsequent stack presentation device (18);
(c) re-stacking all workpiece carriers (20) from the stack-presentation position (76) and transferring them to a feeding position (80) for a loading device (24);
(d) transferring a workpiece (22) by means of the loading device (24) to a subsequent machining unit (12);
(e) upon completion of the machining operation, picking up the workpiece (22) from the loading device (24) in the feeding position (80) by the stack presentation device (18);
(f) repeating the steps (d) to (e) until part of the workpieces (22) have been worked off;
(g) transferring the workpiece carrier (20) with workpieces (22), part of which have already been machined, to a waiting position (78) of the stack-changing unit (26);
(h) repeating the steps (c) to (g) until all workpiece carriers (20) have been re-stacked from the stack-presentation position (76) to the waiting position (78);
(i) picking up a workpiece carrier (20) from the waiting position (78) and transferring it to the feeding position (80) for the loading device (24);
(j) transferring a workpiece (22) by means of the loading device (24) to the subsequent machining unit (12);
(k) upon completion of the machining operation, picking up the workpiece (22) from the loading device (24) in the feeding position (80) by the stack-presentation device (18);
(l) repeating the steps (j) to (k) until all workpieces (22) of a workpiece carrier (20) have been machined;
(m) transferring the workpiece carrier (20), with machined workpieces (22), from the feeding position (80) to the stack-presentation position (76);
(n) repeating the steps (i) to (m) until all workpiece carriers (20) have been stacked back from the waiting position (78) to the stack-presentation position (76);
(o) transferring the workpiece carriers (20), with machined workpieces (22), from the stack-presentation position (76) to the loading/unloading position (74) of the stack-changing device (26).

12. Method of handling workpieces utilizing a handling system according to one of claims 1 - 9 and comprising the following steps:
(a) Feeding a plurality of workpiece carriers (20), containing unmachined workpieces (22) and being stacked one on top of the other, to a loading/unloading position (74) of a stack-changing unit (26);
(b) transferring the stacked workpiece carriers (20) by means of the stack-changing device (26) from the loading/unloading position (74) to a stack-presentation position (76) for a subsequent stack presentation device (18);
(c) re-stacking all workpiece carriers (20) from the stack-presentation position (76) of the stack presentation device (26) to a waiting position (78) of the stack presentation device (18) in a free location;
(d) picking up a workpiece carrier (20) from the waiting position (78) and transferring it to a feeding position (80) for a loading device (24);
(e) transferring a workpiece (22) from the feeding position (80) to a subsequent machining unit (12), by means of the loading device (24);
(f) upon completion of the machining operation, picking up the workpiece carrier (20) from the loading device (24) in the feeding position (80) by the stack presentation device (18);
(g) transferring the workpiece carrier (20), with the machined workpieces (22), to the stack-presentation position (76) of the stack-changing unit (26);
(h) repeating the steps (d) to (g) until all workpiece carriers (20) have been re-stacked from the waiting position (78) to the stack-presentation position (76);
(i) transferring the workpiece carriers (20), with the machined workpieces (22), from the stack-presentation position (76) to the loading/unloading position (74) of the stack-changing unit (26).

13. Method of handling workpieces utilizing a handling system according to one of claims 1 - 9 and comprising the following steps:
(a) Feeding a plurality of workpiece carriers (20), containing unmachined workpieces (22) and being stacked one on top of the other, to a loading/unloading position (74) of a stack-changing unit (26);
(b) transferring the stacked workpiece carriers (20) by means of the stack-changing device (26) from the loading/unloading position (74) to a stack-presentation position (76) for a subsequent stack presentation device (18);
(c) picking up a workpiece carrier (20) from the stack-presentation position (76) and transferring it to a feeding position (80) for a loading device (24);
(d) transferring a workpiece carrier (20) from the feeding position (80) to a subsequent machining unit (12), by means of the loading device (24);
(e) upon completion of the machining operation, picking up the workpiece carrier (20) from the loading device (24) in the feeding position (80) by the stack presentation device (18);
(f) transferring the workpiece carrier (20), with the machined workpieces (22), to a waiting position (78) of the stack-changing unit (26);
(g) repeating the steps (c) to (f) until all workpiece carriers (20) have been re-stacked from the stack-presentation position (76) to the waiting position (78);
(h) re-stacking all workpiece carriers (20) from the waiting position (78) to the stack-presentation position (76);
(i) transferring the workpiece carriers (20), with the machined workpieces (22), from the stack-presentation position (76) to the loading/unloading (74) position of the stack-changing device (26).

14. Method according to one of claims 10 to 13, characterized in that the workpieces (22) are taken over by the loading device from the workpiece carriers (20) in the feeding position (80) and transferred to a subsequent machining or storage unit (12), and the workpiece carriers (20) are re-stacked to the stack-presentation position in empty condition.

15. Method according to one of claims 10 to 13, characterized in that the workpieces (22) are taken over from the loading device (24) in the feeding position by a subsequent machining or storage unit (12), and the previously empty workpiece carriers (20) are stacked back to the stack-presentation position (76) in at least partly filled condition.

16. Method according to one of claims 10 to 15, characterized in that the loading device (24) is coupled to a plurality of machining or storage units (12) to which the workpieces (22) or workpiece carriers (20) are selectively supplied.

17. Method according to one of claims 10 to 16, characterized in that the stacked workpiece carriers (20) are transferred between the loading/unloading position (74) and the stack-presentation position (76) by a rotary movement about a vertical axis (36).

18. Method according to claim 17, characterized in that the workpiece carriers (20) are moved on trolleys (50) in the stack-changing unit (26).

## Revendications

1. Système de manipulation pour la manipulation de pièces comportant une chambre de travail (14) qui est fermée vers l'extérieur par une paroi de protection (16) et à l'intérieure de laquelle est prévu un dispositif de préparation de piles (18) pour la préparation de porte-pièces (20) avec des pièces (22) non usinées et pour la réception de porte-pièces (20) après usinage, comportant un dispositif de chargement (24) affecté au dispositif de préparation de piles (18) pour la reprise de pièces (22) non usinées ou de porte-pièces (20) avec des pièces (22) non usinées et pour la réception de pièces (22) ou de porte-pièces (20) après usinage, caractérisé par une unité de changement de piles (26) destinée à amener des piles de porte-pièces (28) avec des pièces (22) non usinées vers le dispositif de préparation de piles (18) et pour prélever des piles de porte-pièces (28) après usinage, du dispositif de préparation de piles (18), l'unité de changement de piles (26) présentant une première zone (30), à l'intérieur de la chambre de travail (14), pour la préparation de piles de porte-pièces (28) pour le dispositif de préparation de piles (18) et une deuxième zone (32), qui forme à l'extérieur de la chambre de travail (14), une chambre de chargement (40) pour amener ou pour prélever des piles de porte-pièces (28) à partir de l'extérieur, l'unité de changement de piles (26) comportant une table rotative (34) à axe vertical (36) pour le transport des porte-pièces (20) entre la première zone (30) et la deuxième zone (32), et la chambre de travail (14) étant délimitée, dans la zone de l'unité de changement de piles (26), par une portion de paroi de protection (38), qui est reliée à la table rotative (34) et qui peut tourner conjointement avec celle-ci.

2. Système de manipulation selon la revendication 1, caractérisé en ce que la chambre de chargement (40) est séparée de l'extérieur par une deuxième paroi de protection (42), dans laquelle est prévue au moins une porte de chargement (44) pour le chargement et le déchargement de piles de porte-pièces (28), et en ce que la table rotative (34) est accouplée à une unité de verrouillage (46), afin de ne permettre une ouverture de la porte de chargement (44) à partir de l'extérieur, que lorsque la portion de paroi de protection (38) est fermée.

3. Système de manipulation selon la revendication 1 ou 2, caractérisé en ce que les porte-pièces (20) sont maintenus dans l'unité de changement de piles (26), sur des chariots roulants (5), qui sont déplaçables au moyen de la table rotative (34), sur le fond (52), entre la première zone (30) et la deuxième zone (32).

4. Système de manipulation selon l'une des revendications précédentes, caractérisé en ce que la table rotative (34) est conformée en bâti rotatif (54) en H avec une portion centrale (56) commune et deux portions (58, 60) en U, dirigées chacune vers l'extérieur à partir de la portion centrale (56).

5. Système de manipulation selon l'une des revendications 2 à 4, caractérisé en ce que le dispositif de préparation de piles (18), l'unité de changement de piles (26), la paroi de protection (16) et la deuxième paroi de protection (42) sont prévus sur un bâti de base (62) commun.

6. Système de manipulation selon la revendication 5, caractérisé en ce que le dispositif de chargement (24) est maintenu sur le bâti de base (62) et est conformé en portique de chargement ou en robot.

7. Système de manipulation selon l'une des revendications précédentes, caractérisé en ce qu'un dispositif (64) est prévu pour l'éclusage de pièces (22) à l'entrée et à la sortie de la chambre de travail (14).

8. Système de manipulation selon l'une des revendications précédentes, caractérisé en ce que le dispositif de préparation de piles (18) est conformé en dispositif de transfert de palettes, qui comporte une flèche déplaçable verticalement et horizontalement avec un premier bras oscillant (66), sur lequel un deuxième bras oscillant (68) est maintenu accouplé à force en transmission, en ce que le deuxième bras oscillant (68) décrit avec son extrémité libre (70), une courbe locale avec portions presque entièrement linéaires et verticales, lors de la rotation du premier bras oscillant (66).

9. Système de manipulation selon l'une des revendications précédentes, caractérisé en ce qu'a l'intérieur de la chambre de travail (14) est prévu un dispositif (72) pour le maniement ou l'usinage de pièces (22).

10. Procédé de manipulation de pièces au moyen d'un système de manipulation selon l'une des revendications 1 à 9, comportant les étapes suivantes:
(a) amenée d'une pluralité de porte-pièces (20) empilés les uns sur les autres avec des pièces (22) non usinées dans une position de chargement/déchargement (74) d'une unité de changement de piles (26);
(b) transfert des porte-pièces empilés les uns sur les autres de la position de chargement/déchargement (74), au moyen de l'unité de changement de piles (26), dans une position de préparation (76) pour un dispositif de préparation de piles (18) suivant;
(c) dépilage de tous les porte-pièces (20) de la position de préparation (76) de l'unité de changement de piles (26) dans une position d'attente (78) du dispositif de préparation de piles (18) en un emplacement libre;
(d) reprise d'un porte-pièces (20) de la position d'attente (78) et transfert dans une position d'amenée (80) pour un dispositif de chargement (24);
(e) transfert d'une pièce (22) de la position d'amenée (80) au moyen du dispositif de chargement (24) vers un dispositif d'usinage (12) situé en aval;
(f) reprise de la pièce (22) après usinage, du dispositif de chargement (24) dans la position d'amenée (80), par le dispositif de préparation de piles (18);
(g) renouvellement des étapes (e) à (f), jusqu'à ce que toutes les pièces (22) d'un porte-pièces (20) soient usinées;
(h) transfert du porte-pièces (20) avec pièces (22) usinées dans la position de préparation (76) de l'unité de changement de piles (26);
(i) renouvellement des étapes (d) à (h), jusqu'à ce que tous les porte-pièces (20) soient dépilés de la position d'attente (78) dans la position de préparation (76);
(j) transfert des porte-pièces (20) avec pièces (22) usinées, de la position de préparation (76) dans la position de chargement/déchargement (74) de l'unité de changement de piles (26).

11. Procédé de manipulation de pièces au moyen d'un système de manipulation selon l'une des revendications 1 à 9, comportant les étapes suivantes:
(a) amenée d'une pluralité de porte-pièces (20) empilés les uns sur les autres avec des pièces (22) non usinées dans une position de chargement/déchargement (74) d'une unité de changement de piles (26);
(b) transfert des porte-pièces empilés les uns sur les autres de la position de chargement/déchargement (74), au moyen de l'unité de changement de piles (26), dans une position de préparation (76) pour un dispositif de préparation de piles (18) suivant;
(c) reprise d'un porte-pièces (20) de la position de préparation (76) et transfert dans une position d'amenée (80) pour un dispositif de chargement (24);
(d) transfert d'une pièce (22) au moyen du dispositif de chargement (24) vers un dispositif d'usinage (12) situé en aval;
(e) reprise de la pièce (22) après usinage, du dispositif de chargement (24) dans la position d'amenée (80), par le dispositif de préparation de piles (18);
(f) renouvellement des étapes (d) à (e), jusqu'à ce qu'une partie des pièces (22) soit usinée;
(g) transfert du porte-pièces (20) avec des pièces (22), dont une partie est usinée, dans une position d'attente (78) de l'unité de changement de piles (26);
(h) renouvellement des étapes (c) à (g), jusqu'à ce que tous les porte-pièces (20) soient dépilés de la position de préparation (76) dans la position d'attente (78);
(i) reprise d'un porte-pièces (20) de la position d'attente (78) et transfert dans la position d'amenée (80) pour le dispositif de chargement (24);
(j) transfert d'une pièce (22) au moyen du dispositif de chargement (24) vers le dispositif d'usinage (12) situé en aval;
(k) reprise de la pièce (22) après usinage, du dispositif de chargement (24) dans la position d'amenée (80) par le dispositif de préparation de piles (18);
(l) renouvellement des étapes (j) à (k), jusqu'à ce que toutes les pièces (22) d'un porte-pièces (20) soient usinées;
(m) transfert du porte-pièces (20) avec pièces (22) usinées, de la position d'amenée (80) dans la position de préparation (76);
(n) renouvellement des étapes (i) à (m), jusqu'à ce que tous les porte-pièces (20) soient réempilés, de la position d'attente (78) dans la position de préparation (76);
(o) transfert des porte-pièces (20) avec pièces (22) usinées, de la position de préparation (76) dans la position de chargement/déchargement (74) de l'unité de changement de piles (26).

12. Procédé de manipulation de pièces au moyen d'un système de manipulation selon l'une des revendications 1 à 9, comportant les étapes suivantes:
(a) amenée d'une pluralité de porte-pièces (20) empilés les uns sur les autres avec des pièces (22) non usinées dans une position de chargement/déchargement (74) d'une unité de changement de piles (26);
(b) transfert des porte-pièces empilés les uns sur les autres de la position de chargement/déchargement (74), au moyen de l'unité de changement de piles (26), dans une position de préparation (76) pour un dispositif de préparation de piles (18) suivant;
(c) dépilage de tous les porte-pièces (20) de la position de préparation (76) de l'unité de changement de piles (26) dans une position d'attente (78) du dispositif de préparation de piles (18) en un emplacement libre;
(d) reprise d'un porte-pièces (20) de la position d'attente (78) et transfert dans une position d'amenée (80) pour un dispositif de chargement (24);
(e) transfert du porte-pièces (20) de la position d'amenée (80) au moyen du dispositif de chargement (24) vers un dispositif d'usinage (12) situé en aval;
(f) reprise du porte-pièces (20) après usinage, du dispositif de chargement (24) dans la position d'amenée (80), par le dispositif de préparation de piles (18);
(g) transfert du porte-pièces (20) avec pièces (22) usinées dans la position de préparation (76) de l'unité de changement de piles (26);
(h) renouvellement des étapes (d) à (g), jusqu'à ce que tous les porte-pièces (20) soient réempilés de la position d'attente (78) dans la position de préparation (76);
(i) transfert des porte-pièces (20) avec pièces (22) usinées, de la position de préparation (76) dans la position de chargement/déchargement (74) de l'unité de changement de piles (26).

13. Procédé de manipulation de pièces au moyen d'un système de manipulation selon l'une des revendications 1 à 9, comportant les étapes suivantes:
(a) amenée d'une pluralité de porte-pièces (20) empilés les uns sur les autres avec des pièces (22) non usinées dans une position de chargement/déchargement (74) d'une unité de changement de piles (26);
(b) transfert des porte-pièces empilés les uns sur les autres de la position de chargement/déchargement (74), au moyen de l'unité de changement de piles (26), dans une position de préparation (76) pour un dispositif de préparation de piles (18) suivant;
c) reprise d'un porte-pièces (20) de la position de préparation (76) et transfert dans une position d'amenée (80) pour un dispositif de chargement (24);
(d) transfert d'une pièce (22) de la position d'amenée (80) au moyen du dispositif de chargement (24) vers un dispositif d'usinage (12) situé en aval;
(e) reprise de la pièce (22) après usinage, du dispositif de chargement (24) dans la position d'amenée (80), par le dispositif de préparation de piles (18);
(f) transfert du porte-pièces (20) avec pièces (22) usinées dans la position de préparation (76) de l'unité de changement de piles (26);
(g) renouvellement des étapes (c) à (f) jusqu'à ce que tous les porte-pièces (20) soient dépilés de la position de préparation (76) dans la position d'attente (78);
(h) réempilage de tous les porte-pièces (20) de la position d'attente (78) dans la position de préparation (76);
(i) transfert des porte-pièces (20) avec pièces (22) usinées, de la position de préparation (76) dans la position de chargement/déchargement (74) de l'unité de changement de piles (26).

14. Procédé selon l'une des revendications 10 à 13, dans lequel les pièces (22) sont reprises des porte-pièces (20) dans la position d'amenée (80) par le dispositif de chargement (24) et sont transférées vers un dispositif d'usinage ou dispositif de stockage (12) situé en aval et les porte-pièces (20) sont réempilés vides dans la position de préparation (76).

15. Procédé selon l'une des revendications 10 à 13, dans lequel les pièces (22) dans la position d'amenée (80) par le dispositif de chargement (24), sont reprises par un dispositif d'usinage ou de stockage (12) situé en aval et les porte-pièces (20) initialement vides sont réempilés au moins partiellement remplis dans la position de préparation (76).

16. Procédé selon l'une des revendications 10 à 15, dans lequel le dispositif de chargement (24) est accouplé à plusieurs dispositifs d'usinage ou de stockage (12), auxquels sont amenées en option les pièces (22) ou les porte-pièces (20).

17. Procédé selon l'une des revendications 10 à 16, dans lequel les porte-pièces (20) empilés sont transférés entre la position de chargement/déchargement (74) et la position de préparation (76), par un mouvement de rotation autour d'un axe vertical (36).

18. Procédé selon la revendication 17, dans lequel les porte-pièces (20) sont déplacés dans l'unité de changement de piles (26), sur des chariots roulants (50).
